# NEUE EUROPÄISCHE PATENTSCHRIFT

(11) **EP 1 817 371 B2**
(45) Veröffentlichungstag und Bekanntmachung des Hinweises auf die Entscheidung über den Einspruch: **13.07.2011**
(45) Hinweis auf die Patenterteilung: 09.07.2008
(21) Anmeldenummer: 05812316.7
(22) Anmeldetag: 24.11.2005
(51) Int. Cl.: C08K 5/5419, C08K 5/101, C08L 29/02

(54) **HYDROPHOBIERENDES ADDITIV**
HYDROPHOBING ADDITIVE
ADDITIF HYDROPHOBANT

(30) Priorität: 01.12.2004 DE 102004057996
(43) Veröffentlichungstag der Anmeldung: 15.08.2007
(73) Patentinhaber: Wacker Chemie AG, 81737 München (DE)
(72) Erfinder: KILLAT, Stefan, 84489 Burghausen (DE); FRITZE, Peter, 84533 Haiming (DE)
(74) Vertreter: Schuderer, Michael
(86) Internationale Anmeldenummer: PCT/EP2005/012582
(87) Internationale Veröffentlichungsnummer: WO 2006/058655

(56) Entgegenhaltungen:
- EP-A1- 1 394 198
- WO-A-02/31036
- WO-A-95/20627
- WO-A1-2004/098898
- US-A1- 2003 153 651
- US-A1- 2003 219 613

## Beschreibung

Die Erfindung betrifft ein hydrophobierendes Additiv, Verfahren zu dessen Herstellung und dessen Verwendung.

Polymerisate auf Basis von Vinylester, Vinylchlorid, (Meth)-acrylatmonomeren, Styrol, Butadien und Ethylen werden vor allem in Form deren in Wasser redispergierbarer Polymerpulver in vielerlei Anwendungen, beispielsweise als Beschichtungsmittel oder Klebemittel für die unterschiedlichsten Substrate eingesetzt. Redispersionspulver finden auch Verwendung als Bindemittel in hydraulisch abbindenden Beschichtungen oder Klebstoffen wie WDVS-Mörtel (WDVS = Wärmedämmverbundsystem), Fliesenkleber, Putze oder Fugenmassen auf Basis von Zementen oder Gips. Bei kalk- oder zementgebundenen Baustoffen wie Putzen, Spachtelmassen, Fugenmassen und Bauklebern ist häufig der Schutz vor Witterungseinflüssen, zum Beispiel Regen oder Schnee gefordert. Es ist daher erforderlich, die Baustoffe zu hydrophobieren.

Im Stand der Technik ist man bisher so vorgegangen, dass die zur Verbesserung der mechanischen Festigkeit ohnehin eingesetzten Redispersionspulver mit geringen Anteilen an Hydrophobierungsmittel modifiziert worden sind. Die EP 493168 A1 beschreibt hydrophob modifizierte Redispersionspulver auf Basis von wasserunlöslichen, filmbildenden Polymeren, welche als hydrophobe Komponente 0.5 bis 20 Gew.-% Silikone enthalten. In der WO 2004/080909 A2 werden Redispersionspulver beschrieben, welche zur Hydrophobierung Polyalkylalkylsiloxane mit langkettigen Kohlenwasserstoffresten enthalten, in einer Menge von 0.1 bis 20 Gew.-% bezogen auf den Organopolymeranteil. Die EP 1193287 A2 beschreibt die Verwendung von Redispersionspulver-Zusammensetzungen, welche neben einem Anteil an wasserunlöslichen, filmbildenden Polymerisaten noch 0.1 bis 30 Gew.-% Carbonsäureester als hydrophobierende Komponente enthalten. Die EP 1394193 A1 beschreibt ein analoges Redispersionspulver mit Carbonsäureestern, welche als Alkoholkomponente Glycerin, Diglycerin oder Triglycerin enthalten. Die EP 0741759 B1 und EP 0741760 B1 beschreiben Dispersionspulver-Zusammensetzungen auf Basis von wasserunlöslichen, filmbildenden Organopolymeren, mit einem Anteil an Siliziumverbindung von 0.1 bis 30 Gew.-%, bezogen auf den Organopolymeranteil. Gemeinsam ist diesen Lösungsansätzen, dass Redispersionspulver auf Basis von filmbildenden Polymerisaten, welche primär zur Verbesserung der mechanischen Festigkeit von Baustoffmassen eingesetzt werden, mit einem kleinen Anteil an Hydrophobierungsmittel versetzt werden. Das Verhältnis von Siliziumverbindung zu filmbildenden Polymer ist begrenzt. Man kann somit den Hydrophobierungsgrad nicht unabhängig einstellen, da die Einsatzmenge an Redispersionspulver von den gewünschten mechanischen Festigkeiten der zu modifizierenden Baustoffe und damit primär vom Polymeranteil im Pulver abhängt.

Zur bloßen Hydrophobierung, unter anderem auch von Baustoffen werden redispergierbare Hydrophobierungsmittel eingesetzt, welche aus hydrophobierender Komponente und einem Schutzkolloid, welches die Redispergierbarkeit sicherstellt, zusammengesetzt sind. Die EP 279373 B1 und EP 508155 B1 beschreiben Hydrophobierungsmittel aus Organopolysiloxan und Schutzkolloid, welche durch Trocknung der Siloxankomponente in Gegenwart eines wasserlöslichen Polymers (Schutzkolloid) erhalten werden. In der DE 10323205 A wird ein hydrophobes Additiv aus Schutzkolloid und Fettsäure(derivat) beschrieben, wobei die Fettsäure bzw. das Fettsäurederivat in Gegenwart von 30 bis 95 Gew.-% Schutzkolloid getrocknet wird. In der DE-A 19542443 wird empfohlen, eine Kombination aus Redispersionspulver und redispergierbarer Organosiliziumverbindung einzusetzen. Nachteilig beim Einsatz von mit Schutzkolloid stabilisierten Hydrophobierungsmitteln ist, dass ein hoher Schutzkolloidanteil eingesetzt werden muss, um das Hydrophobierungsmittel redispergierbar zu machen. Dieser Schutzkolloidanteil ist aber wasserlöslich, trägt nichts zur Abbindung der Baustoffe bei und tendiert bei intensivem Kontakt mit Wasser zum Auswaschen.

Ziel der vorliegenden Erfindung war es, ein hydrophobierendes Additiv zu entwickeln, welches sich als redispergierbares Pulver oder wässrige Dispersion einsetzen lässt, mit zumindest geringen Bindemitteleigenschaften und möglichst niederem Gehalt an Schutzkolloid.

Überraschenderweise ist dies dadurch gelungen, dass man zur Stabilisierung der hydrophoben Komponente mit Schutzkolloid stabilisierte, wasserunlösliche Polymerisate einsetzt, die zum einen ausreichend stabilisierend für die hydrophobe Komponente wirken, und zum anderen Bindereigenschaften mit einbringen.

Gegenstand der Erfindung ist ein hydrophobierendes Additiv in Form eines in Wasser redispergierbaren Pulvers gemäß Anspruch 1.

Das Basispolymerisat a) umfasst Vinylacetat-Homopolymerisate; Mischpolymerisate von Vinylacetat mit 1 bis 40 Gew.-% Ethylen;
Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 15 C-Atomen im Carbonsäurerest wie Vinylpropionat, Vinyllaurat, Vinylester von alpha-verzweigten Carbonsäuren mit 9 bis 13 C-Atomen wie VeoVa9^{R}, VeoVa10^{R}, VeoVa11^{R};
Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesondere n-Butylacrylat oder 2-Ethylhexylacrylat; und
Mischpolymerisate mit 30 bis 75 Gew.-% Vinylacetat, 1 bis 30 Gew.-% Vinyllaurat oder Vinylester einer alpha-verzweigten Carbonsäure mit 9 bis 13 C-Atomen, sowie 1 bis 30 Gew.-% Acrylsäureester von unverzweigten oder verzweigten Alkoholen mit 1 bis 15 C-Atomen, insbesondere n-Butylacrylat oder 2-Ethylhexylacrylat, welche noch 1 bis 40 Gew.-% Ethylen enthalten; oder Mischpolymerisate mit Vinylacetat, 1 bis 40 Gew.-% Ethylen und 1 bis 60 Gew.-% Vinylchlorid; wobei
die Polymerisate noch die genannten Hilfsmonomere in den genannten Mengen enthalten können, und sich die Angaben in Gew.-% auf jeweils 100 Gew.-% aufaddieren.

Das Basispolymerisat a) umfasst auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat;
Styrol-Acrylsäureester-Copolymerisate, vorzugsweise mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate, vorzugsweise mit einem oder mehreren Monomeren aus der Gruppe Methylacrylat, Ethylacrylat, Propylacrylat, n-Butylacrylat, 2-Ethylhexylacrylat und gegebenenfalls Ethylen;
Styrol-1,3-Butadien-Copolymerisate;
wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Homo- und Mischpolymerisate erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im allgemeinen 40°C bis 100°C, vorzugsweise 60°C bis 90°C beträgt. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.001 bis 0.02 Gew.-%, vorzugsweise 0.001 bis 0.01 Gew.-%, jeweils bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0.001 bis 0.03 Gew.-%, vorzugsweise 0.001 bis 0.015 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Geeignete Schutzkolloide c) für die Polymerisation sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015). Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Wird in Gegenwart von Emulgatoren polymerisiert, beträgt deren Menge 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Nach Abschluss der Polymerisation kann zur Restmonomerentfernung in Anwendung bekannter Methoden nachpolymerisiert werden, im allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die damit erhältlichen wässrigen Dispersionen haben einen Feststoffgehalt von 30 bis 75 Gew.-%, vorzugsweise von 50 bis 60 Gew.-%.

Gegebenenfalls eignen sich auch wasserunlösliche, filmbildende Polyadditions- und Polykondensationspolymere wie Polyurethane, Polyester, Polyether, Polyamide, Melaminformaldehydharze, Naphthalinformaldehydharze, Phenolformaldehydharze, gegebenenfalls auch in Form ihrer oligomeren Vorprodukte, als Schutzkolloide für die Polymerisation.

Für das hydrophobierende Additiv als Komponente b) geeignete Organosilizium-Verbindungen sind Kieselsäureester, vorzugsweise der Formel Si(OR')4, Silane wie Tetraorganosilane SiR₄ und Organoorganoxysilane SiRₙ(OR')₄₋ₙ mit n = 1 bis 3, Polysilane mit vorzugsweise der allgemeinen Formel R₃Si(SiR₂)ₙSiR₃ mit n = 0 bis 500, Organosilanole, vorzugsweise der Formel SiRₙ(OH)₄₋ₙ, Di-, Oligo- und Polysiloxane, vorzugsweise aus Einheiten der allgemeinen Formel R_{c}H_{d}Si(OR')ₑ(OH)_{f} O_{(4-c-d-e-f)/2} mit c = 0 bis 3, d = 0 bis 1, e = 0 bis 3, f = 0 bis 3 und die Summe c+d+e+f je Einheit höchstens 3.5 ist, wobei jeweils R gleich oder verschieden ist und verzweigte oder unverzweigte Alkylreste mit 1 bis 22 C-Atomen, Cycloalkylreste mit 3 bis 10 C-Atomen, Alkylenreste mit 2 bis 4 C-Atomen, sowie Aryl-, Aralkyl-, Alkylaryl-Reste mit 6 bis 18 C-Atomen bedeutet, und R' gleiche oder verschiedene Alkylreste und Alkoxyalkylenreste mit jeweils 1 bis 4 C-Atomen bedeutet, vorzugsweise Methyl und Ethyl bedeutet, wobei die Reste R und R' auch mit Halogenen wie Cl, mit Ether-, Thioether-, Ester-, Amid-, Nitril-, Hydroxyl-, Amin-, Carboxyl-, Sulfonsäure-, Carbonsäureanhydrid- und Carbonyl-Gruppen substituiert sein können, und wobei im Fall der Polysilane R auch die Bedeutung OR' haben kann. Geeignet sind auch Carbosilane, Polycarbosilane, Carbosiloxane, Polycarbosiloxane, Polysilylendisiloxane, Cyclosiloxane.

Bevorzugt als Organosilizium-Verbindung sind Tetramethoxysilan, Tetraethoxysilan, Methyltripropoxysilan, Methyltri(ethoxyethoxy)silan, Vinyltri(methoxyethoxy)silan, (Meth)acryloxypropyltrimethoxysilan, (Meth)acryloxypropyltriethoxysilan, γ-Chlorpropyltriethoxysilan, β-Nitrilethyltriethoxysilan, γ-Mercaptopropyltrimethoxysilan, γ-Mercaptopropyltriethoxysilan, Phenyltriethoxysilan, Isooctyltriethoxysilan, n-Octyltriethoxysilan, Hexadecyltriethoxysilan, Dipropyldiethoxysilan, Methylphenyldiethoxysilan, Diphenyldimethoxysilan, Methylvinyltri(ethoxyethoxy)silan, Tetramethyldiethoxydisilan, Trimethyltrimethoxydisilan, Trimethyltriethoxydisilan, Dimethyltetramethoxydisilan, Dimethyltetraethoxydisilan, mit Trimethylsiloxygruppen endblockierte Methylhydrogenpolysiloxane, mit Trimethylsiloxygruppen endblockierte Mischpolymere aus Dimethylsiloxan- und Methylhydrogensiloxan-Einheiten, Dimethylpolysiloxane, Dimethylpolysiloxane mit Si-OH-Gruppen in den endständigen Einheiten. Ferner sind bevorzugt lineare und verzweigte Oligo- und Polysiloxane sowie Silikonharze, welche durch Kondensationsreaktion einer oder mehrerer zuvor genannter niedermolekularer Siliziumverbindungen zugänglich ist, besonders bevorzugt solche die unter Verwendung von Methylalkoxysilanen, Ethylalkoxysilanen, Phenylalkoxysilanen, Isooctylalkoxysilanen, n-Octylalkoxysilanen, Hexadecylalkoxysilanen und H-Silanen hergestellt werden.

Am meisten bevorzugt werden die Organoorganoxysilane SiRₙ(OR')₄₋ₙ mit n = 1 bis 3, insbesondere Isooctyltriethoxysilan, n-Octyltriethoxysilan, Hexadecyltriethoxysilan und die Organopolysiloxane R_{c}H_{d}Si(OR')ₑ(OH)_{f} O_{(4-c-d-e-f)/2} mit c = 0 bis 3, d = 0 bis 1, e = 0 bis 3, f = 0 bis 3 und die Summe c+d+e+f je Einheit höchstens 3.5 ist, insbesondere Methylsilikonharze, Ethylsilikonharze, Phenylsilikonharze und H-Silikonharze.

Die erfindungsgemäß eingesetzten Organosilizium-Verbindungen sind handelsübliche Produkte bzw. in der Siliziumchemie nach gängigen Methoden herstellbar, z. B. nach Verfahren wie sie in Noll, Chemie und Technologie der Silikone, 2. Auflage 1968, Weinheim, und in Houben-Weyl, Methoden der organischen Chemie, Band E20, Georg Thieme Verlag, Stuttgart (1987) beschrieben sind. Die genannten Siliziumverbindungen können alleine oder als Gemisch in dem hydrophobierenden Additiv enthalten sein.

Als Komponente b) geeignet sind auch Fettsäuren und Fettsäurederivate, die unter alkalischen Bedingungen, vorzugsweise pH > 8, Fettsäure bzw. das entsprechende Fettsäureanion freisetzen. Bevorzugt werden Fettsäureverbindungen aus der Gruppe der Fettsäuren mit 8 bis 22 C-Atomen, deren Metallseifen, deren Amide, sowie deren Ester mit einwertigen Alkoholen mit 1 bis 14 C-Atomen, mit Glykol, mit Polyglykol, mit Polyalkylenglykol, mit Glycerin, mit Mono-, Di- oder Triethanolamin, mit Monosacchariden und mit Polyhydroxyverbindungen.

Geeignete Fettsäuren sind verzweigte und unverzweigte, gesättigte und ungesättigte Fettsäuren mit jeweils 8 bis 22 C-Atomen. Beispiele sind Laurinsäure (n-Dodecansäure), Myristinsäure (n-Tetradecansäure), Palmitinsäure (n-Hexadecansäure), Stearinsäure (n-Octadecansäure) sowie Ölsäure (9-Dodecensäure).

Geeignete Metallseifen sind die der oben genannten Fettsäuren mit Metallen der 1. bis 3. Hauptgruppe bzw. 2. Nebengruppe des PSE, sowie mit Ammoniumverbindungen NX₄⁺, wobei X gleich oder verschieden ist und für H, C₁- bis C₈-Alkylrest und C₁- bis C₈-Hydroxyalkylrest steht. Bevorzugt werden Metallseifen mit Lithium, Natrium, Kalium, Magnesium, Calcium, Aluminium, Zink, und den Ammoniumverbindungen.

Geeignete Fettsäureamide sind die mit Mono- oder Diethanolamin und den oben genannten C₈- bis C₂₂-Fettsäuren erhältlichen Fettsäureamide.

Als Komponente b) geeignete Fettsäureester sind die C₁- bis C₁₄-Alkylester und -Alkylarylester der genannten C₈- bis C₂₂-Fettsäuren, vorzugsweise Methyl-, Ethyl-, Propyl-, Butyl-, Ethylhexyl-Ester sowie der Benzylester.
Geeignete Fettsäureester sind auch die Mono-, Di- und Polyglykolester der C₈- bis C₂₂-Fettsäuren.
Weitere geeignete Fettsäureester sind die Mono- und Diester von Polyglykolen und/oder Polyalkylenglykolen mit bis zu 20 Oxyalkylen-Einheiten, wie Polyethylenglykol und Polypropylenglykol.
Geeignet sind auch die Mono-, Di- und Tri-Fettsäureester des Glycerins mit den genannten C₈- bis C₂₂-Fettsäuren, sowie die Mono-, Di- und Tri-Fettsäureester von Mono-, Di- und Triethanolamin mit den genannten C₈- bis C₂₂-Fettsäuren.
Geeignet sind auch die Fettsäureester von Sorbit und Mannit.

Besonders bevorzugt sind die C₁- bis C₁₄-Alkylester und -Alkylarylester der Laurinsäure und der Ölsäure, Mono- und Diglykolester der Laurinsäure und der Ölsäure, sowie die Mono-, Di- und Tri-Fettsäureester des Glycerins mit der Laurinsäure und der Ölsäure.

Geeignete Hydrophobierungsmittel b) sind auch Kohlenwasserstoff-Wachse wie Paraffinwachse und Polyalkylenwachse.

Die genannten Hydrophobierungsmittel b) können jeweils alleine oder in Form von Gemischen eingesetzt werden. Vorzugsweise enthält das hydrophobierende Additiv 100 bis 500 Gew.-% der Komponente b) bezogen auf den Anteil der Komponente a).

Zur Herstellung der hydrophobierenden Additive kann die Komponente b) auf verschiedene Arten mit der Polymerdispersion vermischt werden, und gegebenenfalls danach getrocknet werden. Wie in der EP 0741759 B1 beschrieben, kann die Polymerisation von ethylenisch ungesättigten Monomeren zu den wasserunlöslichen Homo- oder Copolymerisaten in Gegenwart der SiliziumVerbindungen durchgeführt werden. Es ist auch möglich, die Komponente b) in Gegenwart der Polymerdispersion, gegebenenfalls unter Zusatz weiterer Emulgierhilfen wie Emulgatoren oder wasserlöslichen Schutzkolloiden, unter starker Scherung zu emulgieren. Bevorzugt wird die Komponente b) in Form einer Emulsion der Polymerdispersion zugegeben. Die damit erhältlichen hydrophobierenden Additive, in Form deren wässrigen Dispersionen, haben im Allgemeinen einen Festgehalt von 40 bis 80 %.

Zur Emulgierung der Komponente b) kann man Emulgatoren oder Schutzkolloide einsetzen, wobei diese rein oder als Mischungen verwendet werden können und identisch oder verschieden sein können zu den oben genannten Emulgatoren und Schutzkolloiden, welche in der Polymerisation verwendet werden können. Als Emulgatoren kommen sowohl anionische, kationische als auch nichtionische Emulgatoren in Betracht. Bevorzugt sind solche, die nicht im Schutzkolloid löslich sind und deren Molekulargewichte im Unterschied zu den Schutzkolloiden unter 2000 liegen. Geeignete Emulgatoren sind dem Fachmann geläufig und finden sich beispielsweise in Houben-Weyl, Methoden der organischen Chemie, Bd. XIV, 1, Makromolekulare Stoffe, Georg Thieme Verlag, Stuttgart, 1961, 192-208. Die Emulgatoren werden in der Regel in Mengen von bis zu 5 Gew.-% bezogen auf die Komponente b) eingesetzt.

In einer bevorzugten Ausführungsform wird eine Emulsion der Komponente b) mit 5 bis 50 Gew.-%, vorzugsweise 10 bis 35 Gew.-% Schutzkolloid, bezogen auf die Gesamtmasse an Komponente b) hergestellt. Geeignete Schutzkolloide c) sind die Gleichen wie als Schutzkolloide c) für die Polymerisation benannt, beispielsweise teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlösliche Copolymere; Melaminformaldehydsulfonate, Naphthalinformaldehydsulfonate, Styrolmaleinsäure- und Vinylethermaleinsäure-Copolymere. In einer bevorzugten Ausführungsform werden die Emulsionen der Silikonverbindungen mit Polyvinylalkoholen mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015) stabilisiert.

Des weiteren können bei der Herstellung von in Wasser redispergierbaren Pulvern noch Schutzkolloide c), die als Verdüsungshilfe eingesetzt werden, enthalten sein. In der Ausführungsform, in der die Komponente b) als mit Schutzkolloid stabilisierte Voremulsion der Dispersion des Basispolymerisats a) zugegeben wird, wird vorzugsweise kein weiteres Schutzkolloid vor der Verdüsung zugegeben. Die Gruppe geeigneter Verdüsungsschutzkolloide ist gleich der zuvor genannten Gruppe der Schutzkolloide c) zur Polymerisation oder Emulgierung von Komponente b). In der Dispersionspulver-Zusammensetzung sind beispielsweise ≥ 3 Gew.-%, bevorzugt 7 bis 30 Gew.-% Schutzkolloid, bezogen auf das Gesamtgewicht der hydrophobierenden Komponente b), enthalten. Die Schutzkolloide zur Emulgierung der Komponente b) und die Verdüsungsschutzkolloide müssen nicht identisch sein oder derselben chemischen Gruppe zugehören, dies wird jedoch bevorzugt. In einer besonders bevorzugten Ausführungsform der Dispersionspulver-Zusammensetzung werden Polyvinylalkohole, insbesondere die vorher als bevorzugt genannten, sowohl für die Emulgierung der Komponente b) wie auch als Verdüsungshilfe verwendet.

Weitere, in bevorzugten Ausführungsformen enthaltene Bestandteile der Dispersionspulver-Zusammensetzung sind organische Zusätze. Entschäumer sind üblicherweise mit einem Anteil von bis zu 5 Gew.-% in der erfindungsgemäßen Dispersionspulver-Zusammensetzung enthalten.

Das hydrophobierende Additiv in Pulverform enthält anorganische oder mineralische Verbindungen enthalten, mit einem Anteil von 5 bis 30 Gew.-% in der Dispersionspulver-Zusammensetzung. Diese anorganischen Zusätze erhöhen die Lagerfähigkeit der Dispersionspulver-Zusammensetzung durch Verbesserung der Verblockungsstabilität, insbesondere bei Pulvern mit niedriger Glasübergangstemperatur. Beispiele für herkömmliche Antiblockmittel (Antibackmittel) sind Ca- bzw. Mg-Carbonat, Talk, Gips, Kieselsäure, Kaoline, Silicate mit Teilchengrößen vorzugsweise im Bereich von 10 nm bis 100 µm.
Die anorganischen oder mineralischen Zusätze können auch die Eigenschaften der Dispersionspulver-Zusammensetzung in der Anwendung beeinflussen, zum Beispiel die Härte von Beschichtungen.

Zur Herstellung der Dispersionspulver-Zusammensetzungen werden die wässrigen Dispersionen und Emulsionen der Komponente b), gegebenenfalls nach Zusatz von Schutzkolloiden als Verdüsungshilfe und weiteren Zusätzen, separat oder als Gemisch getrocknet, beispielsweise mittels Wirbelschichttrocknung, Gefriertrocknung oder Sprühtrocknung. Bevorzugt wird die Sprühtrocknung. Die Sprühtrocknung erfolgt dabei in üblichen Sprühtrocknungsanlagen, wobei die Zerstäubung mittels Ein-, Zwei- oder Mehrstoffdüsen oder eines Rotationszerstäubers erfolgen kann. Die zu trocknenden Dispersionen oder Emulsionen können hierbei als Gemisch zerstäubt werden oder gleichzeitig separat zerstäubt werden oder nacheinander separat zerstäubt werden. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

Bei der Sprühtrocknung hat sich vielfach ein Gehalt von bis zu 1.5 Gew.-% Antischaummittel, bezogen auf das Basispolymerisat, als günstig erwiesen.

Die Viskosität der zu zerstäubenden Speise wird über den Feststoffgehalt so eingestellt, dass ein Wert von < 1000 mPas (Brookfield-Viskosität bei 20 Umdrehungen und 23°C), bevorzugt < 350 mPas, erhalten wird. Der Feststoffgehalt der zu zerstäubenden Dispersion beträgt > 30 %, bevorzugt > 40 %.

Zur Verbesserung der anwendungstechnischen Eigenschaften können während der Zerstäubung weitere Zusätze zugegeben werden. Weitere, in bevorzugten Ausführungsformen enthaltene, Bestandteile von Dispersionspulver-Zusammensetzungen sind beispielsweise Antischaummittel, Pigmente, Schaumstabilisatoren.

Die hydrophobierenden Additive können als wässrige Dispersion oder als in Wasser redispergierbare Pulver in den dafür typischen Anwendungsbereichen eingesetzt werden. Sie können alleine oder in Kombination mit herkömmlichen Polymerdispersionen oder Redispersionspulvern eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Scimcoat, Spachtelmassen, Fußbodenspachtelmassen, Verlaufsmassen, Dichtschlämmen, Fugenmörtel und Farben. Bevorzugte Anwendungsgebiete sind Putze, Spachtelmassen und Fugenmörtel. Die hydrophobierenden Additive lassen sich auch als Hydrophobierungsmittel für Sand, Lehm, Papier, Textil, natürlichen oder synthetischen Fasern verwenden. Mit den hydrophobierenden Additiven lassen sich auch Oberflächen modifizieren oder beschichten, beispielsweise in Coating- und Lackanwendungen.

### Beispiele:

Zunächst wurden Versuche zur Emulgierung der hydrophobierenden Komponente b) und der Stabilität der dabei erhaltenen Dispersionen durchgeführt.

### Beispiel A (Dispersion 1):

In einem 3 Liter Rührgefäß wurden 159 g einer 20 Gew.-%-igen Polyvinylalkohol-Lösung (Höppler-Viskosität 4 mPas, Hydrolysegrad 88 Mol-%) und 172 g einer 11 Gew.-%-igen Polyvinylalkohol-Lösung (Höppler-Viskosität 13 mPas, Hydrolysegrad 88 Mol-%) vorgelegt. 192 g einer 1:1-Mischung aus Methylsilikonharz und Polydimethylsiloxan wurde unter starkem Rühren über einen Zeitraum von 5 Minuten eingemischt. Zu dieser Emulsion wurden 1000 g einer 54.9 Gew.-%-igen wässrigen, mit Polyvinylalkohol stabilisierten, Polymerdispersion eines Vinylacetat-VeoVa10-Ethylen-Copolymers gegeben. Die gesamte Mischung wurde mit 350 g Wasser verdünnt. Die Viskosität betrug 125 mPas.

### Beispiel B (Dispersion 2):

Es wurde analog Beispiel A vorgegangen, wobei im Unterschied zu Beispiel A die Zugabe der 1:1-Mischung aus Methylsilikonharz und Polydimethylsiloxan zu einer Mischung bestehend aus den in Beispiel A genannten Polyvinylalkohol-Lösungen und der in Beispiel A genannten Polymerdispersion erfolgte. Die Viskosität betrug 115 mPas.

### Ergebnisse zu den Emulgierversuchen:

Die Qualität der Mischungen wurde anhand der Partikelverteilung (Laserbeugung, Coulter LS 230, Particle Size Analyzer, Fa. Beckman) und visuell nach Lagerung beurteilt.
Die Mischung aus Beispiel A enthielt keine Partikel größer 15 µm und war über mehrere Tage auch bei 50°C stabil.
Die Mischung aus Beispiel B enthielt Partikel bis 30 µm und eine breitere Teilchengrößenverteilung als die Mischung aus Beispiel A. Nach drei Tagen war leichte Phasentrennung zu beobachten.

Die getesteten Mischungen aus den Beispielen A und B waren beide stabil. Eine engere Teilchengrößenverteilung wurde durch das in Beispiel A angewendete Verfahren erreicht. Diese Vorgehensweise wurde daher bei den nachfolgenden Versuchen angewendet.

### Beispiel 1 (Pulver 1) (Vergleich):

2.79 kg einer 1:1-Mischung aus Methylsilikonharz und Polydimethylsiloxan wurden mit 2.72 kg einer 20 Gew.-%-igen Polyvinylalkohol-Lösung (Höppler-Viskosität 4 mPas, Hydrolysegrad 88 Mol-%) und 1.90 kg einer 11 Gew.-%-igen Polyvinylalkohol-Lösung (Höppler-Viskosität 13 mPas, Hydrolysegrad 88 Mol-%) emulgiert. Diese Mischung wurde zu 13.00 kg einer 53.6 Gew.-%-igen wässrigen, mit Polyvinylalkohol stabilisierten Polymerdispersion eines Vinylacetat-VeoVa10-Ethylen-Copolymeren gegeben. Die gesamte Mischung wurde mit ca. 8.00 kg Wasser verdünnt, so dass die Viskosität kleiner 100 mPas ist.
Die Trocknung der wässrigen Mischung erfolgte in einem Sprühtrockner mit Gleichstromprinzip nach dem Stand der Technik. Die Zerstäubung der auf ca. 75°C erwärmten Flüssigkeit erfolgte mit einer Druckdüse (Einstoffdüse) bei 30 bar Zerstäubungsdruck. Die Lufttemperaturen betrugen am Trocknereingang 150°C, am Trocknerausgang 85°C. Während der Trocknung wurde dem Trocknungsgas 10 Gew.-% Antiblockmittel zugegeben, bezogen auf das Gesamtgewicht des Pulvers. Das Gewichtsverhältnis Silizium-Verbindung b) zu wasserunlöslichem Polymer a) war 40 zu 100.

### Beispiel 2 (Pulver 2):

Die Vorgehensweise der Mischungsherstellung und Trocknung entsprach Beispiel 1.
Die Einsatzmengen waren:
4.82 kg einer 1:1-Mischung aus Methylsilikonharz und Polydimethylsiloxan,
3.62 kg einer 20 Gew.-%-igen Polyvinylalkohol-Lösung (Höppler-Viskosität 4 mPas, Hydrolysegrad 88 Mol-%),
2.63 kg einer 11 Gew.-%-igen Polyvinylalkohol-Lösung (Höppler-Viskosität 13 mPas, Hydrolysegrad 88 Mol-%),
9.00 kg einer 53.6 Gew.-%-igen wässrigen, mit Polyvinylalkohol stabilisierten Polymerdispersion eines Vinylacetat-VeoVa10-Ethylen-Copolymeren,
8.75 kg Wasser zur Verdünnung der Mischung, so dass die Viskosität kleiner 100 mPas war.
10 Gew.-% Antiblockmittel im Pulver
Das Gewichtsverhältnis Siliziumverbindung b) zu wasserunlöslichem Polymer a) war 100:100.

### Beispiel 3 (Pulver 3):

Die Vorgehensweise der Mischungsherstellung und Trocknung entsprach Beispiel 1.
Die Einsatzmengen waren:
6.43 kg einer 1:1-Mischung aus Methylsilikonharz und Polydimethylsiloxan,
4.34 kg einer 20 Gew.-%-igen Polyvinylalkohol-Lösung (Höppler-Viskosität 4 mPas, Hydrolysegrad 88 Mol-%),
3.22 kg einer 11 Gew.-%-igen Polyvinylalkohol-Lösung (Höppler-Viskosität 13 mPas, Hydrolysegrad 88 Mol-%),
6.00 kg einer 53.6 Gew.-%-igen wässrigen, mit Polyvinylalkohol stabilisierten Polymerdispersion eines Vinylacetat-VeoVa10-Ethylen-Copolymeren,
9.40 kg Wasser zur Verdünnung der Mischung, so dass die Viskosität kleiner 100 mPas war.
10 Gew.-% Antiblockmittel im Pulver
Das Gewichtsverhältnis Siliziumverbindung b) zu wasserunlöslichem Polymer a) war 200:100.

### Beispiel 4 (Pulver 4):

Die Vorgehensweise der Mischungsherstellung und Trocknung entsprach Beispiel 1.
Die Einsatzmengen waren:
7.50 kg einer 1:1-Mischung aus Methylsilikonharz und Polydimethylsiloxan,
4.78 kg einer 20 Gew.-%-igen Polyvinylalkohol-Lösung (Höppler-Viskosität 4 mPas, Hydrolysegrad 88 Mol-%),
3.58 kg einer 11 Gew.-%-igen Polyvinylalkohol-Lösung (Höppler-Viskosität 13 mPas, Hydrolysegrad 88 Mol-%),
3.50 kg einer 53.6 Gew.-%-igen wässrigen, mit Polyvinylalkohol stabilisierten Polymerdispersion eines Vinylacetat-VeoVa10-Ethylen-Copolymeren,
9.60 kg Wasser zur Verdünnung der Mischung, so dass die Viskosität kleiner 100 mPas war.
10 Gew.-% Antiblockmittel im Pulver
Das Gewichtsverhältnis Siliziumverbindung b) zu wasserunlöslichem Polymer a) war 400:100.

### Vergleichsbeispiel 5 (Pulver V5):

Die Vorgehensweise der Mischungsherstellung und Trocknung entsprach Beispiel 1. Der Rezeptur wurde zusätzlich ein Fettsäuremethylester zugefügt. Die Einsatzmengen waren:
0.66 kg einer 1:1-Mischung aus Methylsilikonharz und Polydimethylsiloxan,
0.35 kg eines Fettsäuremethylesters (Edenor MEC 12/70), 1.44 kg einer 20 Gew.-%-igen Polyvinylalkohol-Lösung (Höppler-Viskosität 4 mPas, Hydrolysegrad 88 Mol-%),
0.93 kg einer 11 Gew.-%-igen Polyvinylalkohol-Lösung (Höppler-Viskosität 13 mPas, Hydrolysegrad 88 Mol-%),
13.00 kg einer 53.6 Gew.-%-igen wässrigen, mit Polyvinylalkohol stabilisierten Polymerdispersion eines Vinylacetat-VeoVa10-Ethylen-Copolymeren,
8.20 kg Wasser zur Verdünnung der Mischung, so dass die Viskosität kleiner 100 mPas war.
10 Gew.-% Antiblockmittel im Pulver
Das Gewichtsverhältnis Siliziumverbindung + Fettsäureester b) zu wasserunlöslichem Polymer a) war 14.5:100.

### Beispiel 6 (Pulver 6) (Vergleich):

Die Vorgehensweise der Mischungsherstellung und Trocknung war analog Beispiel 5. Die Einsatzmengen waren:
1.88 kg einer 1:1-Mischung aus Methylsilikonharz und Polydimethylsiloxan,
1.13 kg eines Fettsäuremethylesters (Edenor MEC 12/70),
2.25 kg einer 20 Gew.-%-igen Polyvinylalkohol-Lösung (Höppler-Viskosität 4 mPas, Hydrolysegrad 88 Mol-%),
1.53 kg einer 11 Gew.-%-igen Polyvinylalkohol-Lösung (Höppler-Viskosität 13 mPas, Hydrolysegrad 88 Mol-%),
14.00 kg einer 53.6 Gew.-%-igen wässrigen, mit Polyvinylalkohol stabilisierten Polymerdispersion eines Vinylacetat-VeoVa10-Ethylen-Copolymeren,
9.30 kg Wasser zur Verdünnung der Mischung, so dass die Viskosität kleiner 100 mPas war.
10 Gew.-% Antiblockmittel im Pulver
Das Gewichtsverhältnis Siliziumverbindung + Fettsäureester b) zu wasserunlöslichem Polymer a) war 40:100.

### Beispiel 7 (Pulver 7) (Vergleich):

Die Vorgehensweise der Mischungsherstellung und Trocknung war analog Beispiel 5. Die Einsatzmengen waren:
1.50 kg einer 1:1-Mischung aus Methylsilikonharz und Polydimethylsiloxan,
1.13 kg eines Fettsäuremethylesters (Edenor MEC 12/70),
2.03 kg einer 20 Gew.-%-igen Polyvinylalkohol-Lösung (Höppler-Viskosität 4 mPas, Hydrolysegrad 88 Mol-%),
1.36 kg einer 11 Gew.-%-igen Polyvinylalkohol-Lösung (Höppler-Viskosität 13 mPas, Hydrolysegrad 88 Mol-%),
14.00 kg einer 53.6 Gew.-%-igen wässrigen, mit Polyvinylalkohol stabilisierten Polymerdispersion eines Vinylacetat-VeoVa10-Ethylen-Copolymeren,
5.60 kg Wasser zur Verdünnung der Mischung, so dass die Viskosität kleiner 100 mPas war.
10 Gew.-% Antiblockmittel im Pulver
Das Gewichtsverhältnis Siliziumverbindung + Fettsäureester b) zu wasserunlöslichem Polymer a) war 35:100.

### Beispiel 8 (Pulver 8) (Vergleich):

Die Vorgehensweise der Mischungsherstellung und Trocknung war analog Beispiel 1. Die Einsatzmengen waren:
6.00 kg einer 1:1-Mischung aus Methylsilikonharz und Polydimethylsiloxan,
2.64 kg einer 20 Gew.-%-igen Polyvinylalkohol-Lösung (Höppler-Viskosität 4 mPas, Hydrolysegrad 88 Mol-%),
4.80 kg einer 11 Gew.-%-igen Polyvinylalkohol-Lösung (Höppler-Viskosität 13 mPas, Hydrolysegrad 88 Mol-%),
2.45 kg einer 49.0 Gew.-%-igen wässrigen, mit Polyvinylalkohol stabilisierten Polymerdispersion eines Vinylchlorid-Vinyllaurat-Ethylen-Copolymeren,
11.00 kg Wasser zur Verdünnung der Mischung, so dass die Viskosität kleiner 100 mPas war.
10 Gew.-% Antiblockmittel im Pulver.
Das Gewichtsverhältnis Siliziumverbindung b) zu wasserunlöslichem Polymer a) war 500:100.

### Beispiel 9 (Pulver 9) (Vergleich):

Das Beispiel Pulver 9 unterschied sich von Beispiel 8 nur in der Wahl der Silizium-Verbindung. Anstelle der 1:1-Mischung aus Methylsilikonharz und Polydimethylsiloxan wurde eine 92:8-Mischung aus Methylsilikonharz und Isooctyltriethoxysilan eingesetzt.
Die Vorgehensweise der Mischungsherstellung und Trocknung entsprach Beispiel Pulver 1. Die Einsatzmengen waren:
6.00 kg einer 92:8-Mischung aus Methylsilikonharz und Isooctyltriethoxysilan,
2.64 kg einer 20 Gew.-%-igen Polyvinylalkohol-Lösung (Höppler-Viskosität 4 mPas, Hydrolysegrad 88 Mol-%),
4.80 kg einer 11 Gew.-%-igen Polyvinylalkohol-Lösung (Höppler-Viskosität 13 mPas, Hydrolysegrad 88 Mol-%),
2.45 kg einer 49.0 Gew.-%-igen wässrigen, mit Polyvinylalkohol stabilisierten Polymerdispersion eines Vinylchlorid-Vinyllaurat-Ethylen-Copolymeren,
11.00 kg Wasser zur Verdünnung der Mischung, so dass die Viskosität kleiner 100 mPas war.
10 Gew.-% Antiblockmittel im Pulver.
Das Gewichtsverhältnis Siliziumverbindung b) zu wasserunlöslichem Polymer a) war 500:100.

### Vergleichsbeispiel 10 (Pulver V10):

Es wurde ein Pulver ohne wasserunlösliches, filmbildendes Polymer a) nach EP 0754737 A2 hergestellt.
6.00 kg einer 1:1-Mischung aus Methylsilikonharz und Polydimethylsiloxan wurden mit 3.60 kg einer 20 Gew.-%-igen Polyvinylalkohol-Lösung (Höppler-Viskosität 4 mPas, Hydrolysegrad 88 Mol-%) und 2.73 kg einer 11 Gew.-%-igen Polyvinylalkohol-Lösung (Höppler-Viskosität 13 mPas, Hydrolysegrad 88 Mol-%) emulgiert. Durch Zugabe von 9.00 kg Wasser wurde die Viskosität auf kleiner 100 mPas eingestellt. Die Durchführung der Trocknung war analog Beispiel 1.

### Vergleichsbeispiel 11 (Pulver V11):

Es wurde ein Dispersionspulver ohne hydrophobe Komponente b) hergestellt.
14.00 kg einer 53.6 Gew.-%-igen wässrigen, mit Polyvinylalkohol stabilisierten Polymerdispersion eines Vinylacetat-VeoVa10-Ethylen-Copolymeren wurde mit 1.88 kg einer 20 Gew.-%-igen Polyvinylalkohol-Lösung (Höppler-Viskosität 4 mPas, Hydrolysegrad 88 Mol-%) und 3.41 kg einer 11 Gew.-%-igen Polyvinylalkohol-Lösung (Höppler-Viskosität 13 mPas, Hydrolysegrad 88 Mol-%) vermischt. Durch Zugabe von 2.00 kg Wasser wurde die Viskosität auf kleiner 100 mPas eingestellt. Die Durchführung der Trocknung war wie in Beispiel 1.

### Ausprüfung:

Die erhaltenen Pulver wurden auf ihre Pulvereigenschaften und auf die Wirksamkeit als Hydrophobierungsmittel in zementären und gipshaltigen Anwendungen überprüft.

### Ausprüfung Pulvereigenschaften:

Nach den unten beschriebenen Methoden wurden die Feuchte des Pulvers, die Rieselfähigkeit, die so genannte Blockstabilität sowie die Qualität einer 50 %-igen Redispersion in Wasser beurteilt.

### Bestimmung der Rieselfähigkeit RF der Pulver:

In einen Metalltrichter mit einer Auslauföffnung von 15 mm Durchmesser wurden 150 g Pulver gegeben. Es wurde die Zeit gestoppt, bis die gesamte Pulvermenge aus dem Trichter gerieselt war. Falls der Pulverfluss zum Stehen kommt bevor die gesamte Pulvermenge ausgerieselt ist, wird der Trichter durch leichtes Klopfen erschüttert.
Die Rieselfähigkeit der Pulver wurde wie folgt klassifiziert:
Note 1: Sehr gute Rieselfähigkeit: Pulver frei fließend, Auslaufzeit sehr kurz.
Note 2: Gute Rieselfähigkeit: Pulver frei fließend, Auslaufzeit deutlich länger als bei Note 1.
Note 3: Befriedigende Rieselfähigkeit: Das Pulver rieselt sehr langsam oder der Pulverfluss kommt ins Stocken. Durch Erschütterungen des Trichters beginnt das Pulver aber wieder zu fließen.
Note 4: Keine Rieselfähigkeit: Das Pulver rieselt nur zu einem Teil aus dem Trichter oder es bilden sich Pulverbrücken. Auch Erschütterungen des Trichters können den Pulverfluss nicht verbessern.

### Bestimmung der Redispergierqualität RD des Pulvers:

50 g Dispersionspulver wurden in 50 ml Wasser redispergiert. Von der entstehenden Redispersion wurden die Partikelverteilung gemessen und mit der Partikelverteilung der dem Pulver zugrunde liegenden Dispersion oder Emulsion verglichen.
Die Qualität der Redispersion wurde wie folgt klassifiziert:
Note 1: Sehr gute Redispersion
Note 2: Gute Redispersion
Note 3: Befriedigende Redispersion
Note 4: Sehr schlechte Redispersion

### Bestimmung der Blockstabilität des Pulvers BS:

Zur Bestimmung der Blockstabilität wurde das Dispersionspulver in ein Eisenrohr mit Verschraubung gefüllt und danach mit einem Metallstempel belastet. Unter Belastung wurde im Trockenschrank 16 Stunden bei 50°C gelagert. Nach dem Abkühlen auf Raumtemperatur wurde das Pulver aus der Apparatur entfernt und die Blockstabilität qualitativ durch Zerdrücken des Pulvers bestimmt. Die Blockstabilität wurde wie folgt klassifiziert:
Note 1: Sehr gute Blockstabilität
Note 2: Gute Blockstabilität
Note 3: Befriedigende Blockstabilität
Note 4: Nicht blockstabil

Die Ergebnisse der Prüfung (unter Berücksichtigung der Feuchte des Pulvers) sind in Tabelle 1 zusammengefasst.

**Tabelle 1: Pulvereigenschaften der Pulver 1 bis Pulver 11**

| Pulver | V1 | 2 | 3 | 4 | V5 | V6 | V7 | V8 | V9 | V10 | V11 |
|---|---|---|---|---|---|---|---|---|---|---|---|
| Feuchte (%) | 1.5 | 1.5 | 1.8 | 1.8 | 2.0 | 2.8 | 2.1 | 1.3 | 2.4 | 1.4 | 1.0 |
| RF | 2 | 2 | 3 | 3 | 2 | 3 | 3 | 3 | 3 | 3 | 2 |
| BS | 2 | 2 | 1 | 3 | 1 | 2 | 2 | 2 | 2 | 2 | 1 |
| RD | 1 | 1 | 2 | 3 | 1 | 1 | 1 | 2 | 2 | 3 | 1 |

Die Ergebnisse zeigen, dass man rieselfähige und blockstabile Dispersionspulver-Zusammensetzungen mit einem Gewichtsverhältnis von hydrophobierender Komponente b) zu wasserunlöslichem Polymer von deutlich über 0.30 herstellen kann. Die Pulver-und Redispergiereigenschaften sind sogar bei einem Gewichtsverhältnis von hydrophobierender Komponente b) zu wasserunlöslichem Polymer a) von 500:100 (Pulver 8 und Pulver 9) noch befriedigend bis gut.

Prüfung der Dispersionspulver-Zusammensetzungen in zementären Fugenmörteln:

Die Rezeptur des Fugenmörtels ist in Tabelle 2 zusammengestellt.

**Tabelle 2: Zusammensetzung Fugenmörtel-Rezeptur**

| | |
|---|---|
| Weißzement CEMI 42.5 | 250 |
| Hydrophobierendes Additv | 10 |
| Quarzsand | 460 |
| Calciumcarbonat | 280 |
| Gesamt | 1000.0 |

Der Trockenmörtel wurde pro 100 g Trockenmischung mit 23.6 g Wasser angerührt.
Bei dem Test ohne Zusatz von hydrophobierendem Additiv wurde der Trockenmörtel pro 100g mit 24.0 g Wasser angerührt.

Nach EN 12808 wurden die Hydrophobierung, Biegezug- und Druckfestigkeit eines mit den erfindungsgemäßen hydrophobierenden Additiven modifizierten, zementären Fugenmörtels bestimmt.

Zur Prüfung gemäß EN 12808 wurde zur Herstellung der Probekörper der Mörtel mit einer Schablone (50 mm Durchmesser, 10 mm Dicke) auf eine Betonplatte aufgetragen.

### Hydrophobierung (Wasseraufnahme):

Nach einer Lagerung bei Normklima von einem Tag (WA 1d), von 7 Tagen (WA 7d) und 14 Tagen (WA 14d) wurde jeweils mit einer Pipette ein Wassertropfen aufgetragen, und die Zeit (min) bestimmt bis der Wassertropfen vollständig in den Probekörper eingedrungen war.

Die Prüfung der Wasseraufnahme in % erfolgte nach EN 12808-5.

**Tabelle 3: Ergebnisse Fugenmörtel mit 1 Gew.-% hydrophobierendem Additiv**

| Pulver | V1 | 2 | V10/V11 (1:1) | V8 | V9 | ohne |
|---|---|---|---|---|---|---|
| WA 1d (min) | 80 | 50 | 60 | 90 | 420 | 5 |
| WA 7d (min) | 100 | 70 | 75 | 150 | 420 | 5 |
| WA 14d (min) | 100 | 90 | 90 | 150 | 420 | 5 |
| BZ (N/mm²); 28 d NK | 4.62 | 3.09 | 2.49 | 3.01 | 3.39 | 4.46 |
| BZ (N/mm²); Frost-Tau | 3.11 | 2.82 | 2.32 | 2.58 | 3.09 | 3.91 |
| DF (N/MM²); 28 d NK | 14.19 | 11.52 | 8.22 | 9.88 | 12.82 | 15.55 |
| DF (N/mm²); Frost-Tau | 11.57 | 10.52 | 8.01 | 9.64 | 12.50 | 14.07 |
| WA 30 min (%) | 0.57 | 1.90 | 2.31 | 2.67 | 1.86 | 2.97 |
| WA 240 min (%) | 1.88 | 3.50 | 3.54 | 5.86 | 3.71 | 6.54 |

Die Prüfergebnisse aus Tabelle 3 bestätigen die Verwendbarkeit der hydrophobierenden Additive mit hohem Anteil SiliziumVerbindungen als Hydrophobierungsmittel in zementären Mischungen, hier einem Fugenmörtel. Durch Zusatz von einem Prozent Polymerpulver zur zementären Trockenmischung wird die Eindringzeit des Wasserstropfens im Vergleich zum Blindwert ohne Polymerzusatz stark erhöht und die Wasseraufnahme des Probekörpers erniedrigt.
Als Vergleich zum Pulver 2 aus Beispiel 2 wurde eine 1:1-Mischung der Pulver V10 und V11 aus den Vergleichsbeispielen 10 bzw. 11 getestet. Die Ergebnisse in Tabelle 3 bestätigen, dass Hydrophobie und Bindemitteleigenschaften der erfindungsgemäßen hydrophobierenden Additive sogar besser sind als die bei der Hydrophobierung nach dem Stand der Technik eingesetzten Kombinationen aus nicht modifiziertem Redispersionspulver (V11) und redispergierbarem Hydrophobierungsmittel (V10).

### Prüfung der Dispersionspulver-Zusammensetzungen in zementären Massen:

Es wurde die Hydrophobierung einer in Tabelle 4 dargestellten zementären Masse durch den Zusatz des hydrophobierenden Additivs geprüft.

Zur Herstellung der Probekörper wurde der Mörtel in Prismenform (10 x 40 x 160 mm) gegossen. Nach 6 Tagen Lagerung bei Normklima wurde die Eindringzeit (EZ) eines Wassertropfens in die Oberfläche des Probekörpers gemessen.
Zudem wurde der Probekörper, welcher schräg aufgestellt war, für drei Tage mit Wasser besprüht und die Benetzung der Oberfläche und das Abperlen des Wassers (BAW) visuell beurteilt.

Die Beurteilungsskala ist wie folgt klassifiziert:
Note 1: Keine Benetzung der Oberfläche mit Wasser. Wassertropfen perlen vollständig ab.
Note 2: Ein Teil der Oberfläche ist mit Wasser benetzt. Wasser-Abperleffekt noch teilweise vorhanden.
Note 3: Probenoberfläche vollständig benetzt oder Probenkörper vollständig durchfeuchtet. Wasser-Abperleffekt nicht mehr vorhanden.

**Tabelle 4: Zusammensetzung zementäre Prüfrezeptur**

| | |
|---|---|
| Portlandzement CEM I 42.5 R | 270 |
| Quarzsand | 470 |
| Hydrophobes Additiv | 20 |
| Calciumcarbonat | 240 |
| Gesamt | 1000.0 |

Der Mörtel wurde pro 100 g Trockenmischung mit 27.5 g Wasser angerührt.

**Tabelle 5: Ergebnisse Hydrophobierung einer zementären Formulierung mit 2 % hydrophobierendem Additiv**

| Pulver | V1 | 2 | 3 | 4 | V5 | V6 | V7 | V8 | V9 | V10/V11 (4:10) | V10/V11 (1:1) | V10/V11 (2:1) | V11 | ohne |
|---|---|---|---|---|---|---|---|---|---|---|---|---|---|---|
| EZ 6d (h) | 3.5 | 7.5 | >9 | >9 | 4.8 | >9 | > 9 | >9 | >9 | 2.8 | 5.0 | 8.7 | 0.1 | 0.0 |
| BAW | 2 | 1-2 | 1 | 1 | 2-3 | 1 | 2 | 1 | 1 | 2 | 2 | 1-2 | 3 | 3 |

Die Ergebnisse in Tabelle 5 bestätigen die Wirksamkeit der hydrophobierenden Additive als Hydrophobierungsmittel in zementären Formulierungen. Eine erhöhte Hydrophobierung, sichtbar durch eine längere Eindringzeit des Wassertropfens oder einen lang anhaltenden Wasser-Abperleffekt, kann durch einen erhöhten Anteil Siliziumverbindung in den Dispersionspulver-Zusammensetzungen bei konstanter Einsatzmenge Polymerpulver in der zementären Formulierung erreicht werden. Die Hydrophobierung ist der überlegen, welche man mit Pulvermischungen von einem unmodifizierten Polymerpulver mit einem Silizium-Verbindung enthaltenden Pulver erhält: Vergleich Beispiel Pulver 2 mit (V10/V11; 1:1). Zusätzlich erhält man einen Abperleffekt der beim Einsatz der im Stand der Technik verwendeten Kombinationen aus Redispersionspulver und redispergierbarem Hydrophobierungsmittel nicht zu beobachten ist. Auf schräg gestellten Flächen der Probenkörper, welche mit dem hydrophobierenden Additiv behandelt sind, perlen auftreffende Wassertropfen über einen langen Zeitraum ab, ohne die Oberfläche zu benetzen.

### Prüfung der hydrophobierenden Additive in gipshaltigen Spachtelmassen:

Die in Tabelle 6 angegebene Gipsspachtelmasse wurde angerührt und in Prismenform (10 x 40 x 160 mm) gegossen. Nach 7 Tagen Trocknung wurde die Eindringgeschwindigkeit (EG) eines Wassertropfens (1 ml) geprüft.
Zudem wurde nach 7 Tagen Trocknung die zeitabhängige Wasseraufnahme in einem Wasserbad nach einer Lagerzeit von 30 min (WA 30) und einer Lagerzeit von 120 min (WA 120) ermittelt.

**Tabelle 6: Zusammensetzung der Gipsspachtelmasse**

| | |
|---|---|
| Alabastergips | 800 |
| Calciumcarbonat | 161 |
| Cellulose | 9 |
| Hydrophobierendes Additiv | 20 |
| Kaliumsulfat | 10 |
| Gesamt | 1000 |

Die Gipsspachtelmasse wurde pro 100 g Trockenmischung mit 54 g Wasser angerührt.

**Tabelle 7: Ergebnisse Hydrophobierung Gipsspachtelmasse**

| Pulver | V1 | 2 | 3 | V5 | V6 | V7 | V10/V11 (4:10) | V10/V11 (1:1) | V10/V11 (2:1) | ohne |
|---|---|---|---|---|---|---|---|---|---|---|
| EG 7d (min) | 13 | 14 | 12 | 7.5 | 11 | 10 | 13 | 10 | 11.5 | 4 |
| WA 30 (%) | 21.6 | 20.6 | 30.5 | 37.3 | 33.3 | 32.2 | 24.3 | 20.4 | 31.0 | 41.2 |
| WA120 (%) | 23.6 | 22.3 | 33.0 | 39.2 | 34.2 | 35.4 | 26.3 | 25.5 | 32.7 | 41.4 |

Die Ergebnisse in Tabelle 7 bestätigen, dass die erfindungsgemäßen Dispersionspulver-Zusammensetzungen auch in gipshaltigen Bauanwendungen als Hydrophobierungsmittel einsetzbar sind, und auch hier den Kombinationen aus dem Stand der Technik überlegen sind: Vergleich Beispiel 2 mit (V10/V11; 1:1).

## Patentansprüche

1. Hydrophobierendes Additiv in Form eines in Wasser redispergierbaren Pulvers enthaltend
a) ein oder mehrere wasserunlösliche, filmbildende Basispolymerisate aus der Gruppe umfassend
Vinylacetat-Homopolymerisate,
Mischpolymerisate von Vinylacetat mit 1 bis 40 Gew.-% Ethylen,
Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 15 C-Atomen im Carbonsäurerest,
Mischpolymerisate von Vinylacetat, 1 bis 40 Gew.-% Ethylen und vorzugsweise 1 bis 60 Gew.-% Acrylsäureester von unterzweigen oder verzweigten Alkoholen mit 1 bis 15 C-Atomen, Mischpolymerisate mit 30 bis 75 Gew.-% Vinylacetat, 1 bis 30 Gew.-% Vinyllaurat oder Vinylester einer alpha-verzweigten Carbonsäure mit 9 bis 13 C-Atomen, sowie 1 bis 30 Gew.-% Acrylsäureester von unverzweigten oder verzweigten Alkoholen mit 1 bis 15 C-Atomen, welche noch 1 bis 40 Gew.-% Ethylen enthalten können,
Mischpolymerisate mit Vinylacetat, 1 bis 40 Gew.-% Ethylen und 1 bis 60 Gew.-% Vinylchlorid,
(Meth)acrylsäureester-Polymerisate, Styrol-Acrylsäureester-Copolymerisate, Vinylacetat-Acrylsäureester-Copolymerisate, Styrol-1,3-Butadien-Copolymerisate,
b) eine oder mehrere hydrophobe Verbindungen aus der Gruppe umfassend organosiliziumverbindungen, Fettsäuren und deren Fettsäurederivate, sowie Kohlenwasserstoffwachse, und
c) ein oder mehrere Schutzkolloide,
**dadurch gekennzeichnet, dass** der Anteil der Komponente b) bezogen auf das Gesamtgewicht der Komponente a) 100 bis 500 Gew.-% beträgt, und anorganischen oder mineralische Verbindungen mit einem Anteil von 5 bis 30 Gew.-% im Pulver enthalten sind.

2. Hydrophobierendes Additiv nach Anspruch 1, **dadurch gekennzeichnet, dass** als Komponente b) ein oder mehrere Organosilizium-Verbindungen enthalten sind aus der Gruppe umfassend Kieselsäureester, Silane, Polysilane, Organosilanole, Di-, Oligo- und Polysiloxane, Carbosilane, Polycarbosilane, Carbosiloxane, Polycarbosiloxane, Polysilylendisiloxane, Cyclosiloxane.

3. Hydrophobierendes Additiv nach Anspruch 1 oder 2, **dadurch gekennzeichnet, dass** als Komponente b) ein oder mehrere Verbindungen enthalten sind aus der Gruppe umfassend Fettsäuren mit 8 bis 22 C-Atomen, deren Metallseifen, deren Amide, sowie deren Ester mit einwertigen Alkoholen mit 1 bis 14 C-Atomen, mit Glykol, mit Polyglykol, mit Polyalkylenglykol, mit Glycerin, mit Mono-, Di- oder Triethanolamin, mit Monosacchariden und mit Polyhydroxyverbindungen.

4. Hydrophobierendes Additiv nach Anspruch 1 bis 3, **dadurch gekennzeichnet, dass** als Schutzkolloid c) teilverseifte oder vollverseifte, gegebenenfalls hydrophob modifizierte, Polyvinylalkohole mit einem Hydrolysegrad von 80 bis 100 Mol% und einer Höpplerviskosität, in 4 %-iger wässriger Lösung von 1 bis 30 mPas (Methode nach Höppler bei 20°C, DIN 53015), eingesetzt werden.

5. Verfahren zur Herstellung der hydrophobierenden Additive nach Anspruch 1 bis 4, **dadurch gekennzeichnet, dass** die Komponente b) alleine oder als Mischung mit weiteren Zusätzen der wässrigen Dispersion des Basispolymerisats a) in reiner Form oder in Form einer Voremulsion zugegeben wird, oder während der Trocknung mit der Polymerdispersion zerstäubt wird, oder nach der Trocknung dem Polymerpulver zugegeben wird.

6. Verwendung der hydrophobierenden Additive nach Anspruch 1 bis 4 in bauchemischen Produkten, gegebenenfalls in Verbindung mit hydraulisch abbindenden Bindemitteln wie Zementen; Gips und wasserglas.

7. Verwendung der hydrophobierenden Additive nach Anspruch 1 bis 4 für die Herstellung von Baukleber, Fliesenkleber und Vollwärmeschutzkleber, Putzen, Scimcoat, Spachtelmassen, Fußbodenspachtelmassen, Verlaufsmassen, Dichtschlämmen, Fugenmörtel und Farben.

8. Verwendung der hydrophobierenden Additive nach Anspruch 1 bis 4 als Hydrophobierungsmittel zur Modifizierung oder Bindung von Sand, Lehm, Papier, Textil, natürlichen oder synthetischen Fasern.

9. Verwendung der hydrophobierenden Additive nach Anspruch 1 bis 4 in Coating- und Lackanwendungen.

## Claims

1. Hydrophobicizing additive in the form of a water-redispersible powder comprising
a) one or more water-insoluble, film-forming base polymers from the group consisting of
vinyl acetate homopolymers,
copolymers of vinyl acetate with from 1 to 40% by weight of ethylene,
copolymers of vinyl acetate with from 1 to 40% by weight of ethylene and from 1 to 50% by weight of one or more further comonomers from the group consisting of vinyl esters having from 1 to 15 carbon atoms in the carboxylic acid radical, copolymers of vinyl acetate, from 1 to 40% by weight of ethylene and preferably 1 to 60% by weight of acrylic esters of unbranched or branched alcohols having from 1 to 15 carbon atoms, copolymers which comprise from 30 to 75% by weight of vinyl acetate, from 1 to 30% by weight of vinyl laurate or the vinyl ester of an alpha-branched carboxylic acid having from 9 to 13 carbon atoms, and from 1 to 30% by weight of acrylic esters of unbranched or branched alcohols having from 1 to 15 carbon atoms, and may further comprise from 1 to 40% by weight of ethylene,
copolymers comprising vinyl acetate, from 1 to 40% by weight of ethylene and from 1 to 60% by weight of vinyl chloride,
(meth)acrylic ester polymers, styrene-acrylic ester copolymers, vinyl acetate-acrylic ester copolymers, styrene-1,3-butadiene copolymers,
b) one or more hydrophobic compounds from the group consisting of organosilicon compounds, fatty acids and their fatty acid derivatives and hydrocarbon waxes, and
c) one or more protective colloids,
**characterized in that** the proportion of the component b) based on the total weight of the component a) is from 100 to 500% by weight, and inorganic or mineral compounds are present in the powder in a proportion of from 5 to 30% by weight.

2. Hydrophobicizing additive according to Claim 1, **characterized in that** one or more organosilicon compounds from the group consisting of silicic esters, silanes, polysilanes, organosilanols, disiloxanes, oligosiloxanes and polysiloxanes, carbosilanes, polycarbosilanes, carbosiloxanes, polycarbosiloxanes, polysilylenedisiloxanes, cyclosiloxanes are present as component b).

3. Hydrophobicizing additive according to Claim 1 or 2, **characterized in that** one or more compounds from the group consisting of fatty acids having from 8 to 22 carbon atoms, their metal soaps, their amides and their esters with monohydric alcohols having from 1 to 14 carbon atoms, with glycol, with polyglycol, with polyalkylene glycol, with glycerol, with monoethanolamine, diethanolamine or triethanolamine, with monosaccharides and with polyhydroxy compounds are present as component b).

4. Hydrophobicizing additive according to any of Claims 1 to 3, **characterized in that** partially hydrolyzed or fully hydrolyzed, if desired hydrophobically modified, polyvinyl alcohols having a degree of hydrolysis of from 80 to 100 mol% and a Höppler viscosity in 4% strength aqueous solution of from 1 to 30 mPas (Höppler method at 20°C, DIN 53015) are used as protective colloid c).

5. Process for producing the hydrophobicizing additives according to any of Claims 1 to 4, **characterized in that** the component b) is added either alone or as a mixture with further additives to the aqueous dispersion of the base polymer a) in pure form or in the form of a preemulsion, or is atomized together with the polymer dispersion during drying, or is added to the polymer powder after drying.

6. Use of the hydrophobicizing additives according to any of Claims 1 to 4 in building chemical products, if desired in combination with hydraulically setting binders such as cements, plaster of Paris and water glass.

7. Use of the hydrophobicizing additives according to any of Claims 1 to 4 for the production of building adhesives, tile adhesives and thermal insulation adhesives, renders, skim coat, knifing fillers, flooring screeds, self-leveling compositions, sealing slurries, jointing mortar and paints.

8. Use of the hydrophobicizing additives according to any of Claims 1 to 4 as hydrophobicizing agents for modifying or binding sand, clay, paper, textile, natural or synthetic fibers.

9. Use of the hydrophobicizing additives according to any of Claims 1 to 4 in coating applications and paint and varnish applications.

## Revendications

1. Additif hydrophobant sous la forme d'une poudre redispersible dans l'eau, contenant :
a) un ou plusieurs polymères de base filmogènes insolubles dans l'eau du groupe comprenant :
des homopolymères d'acétate de vinyle,
des polymères mixtes d'acétate de vinyle avec 1 à 40 % en poids d'éthylène,
des polymères mixtes d'acétate de vinyle avec 1 à 40 % en poids d'éthylène et 1 à 50 % en poids d'un ou de plusieurs autres co-monomères du groupe des esters de vinyle avec 1 à 15 atomes de carbone dans le radical acide carboxylique,
des polymères mixtes d'acétate de vinyle, de 1 à 40 % en poids d'éthylène et de préférence de 1 à 60 % en poids d'esters d'acide acrylique d'alcools linéaires ou ramifiés avec 1 à 15 atomes de carbone, des polymères mixtes avec 30 à 75 % en poids d'acétate de vinyle, de 1 à 30 % en poids de laurate de vinyle ou d'ester de vinyle d'un acide carboxylique ramifié en α avec 9 à 13 atomes de carbone, ainsi que de 1 à 30 % en poids d'esters d'acide acrylique d'alcools linéaires ou ramifiés avec 1 à 15 atomes de carbone, lesquels peuvent encore contenir 1 à 40 % en poids d'éthylène,
des polymères mixtes avec de l'acétate de vinyle, 1 à 40 % en poids d'éthylène et 1 à 60 % en poids de chlorure de vinyle,
des polymères d'esters (méth)acryliques, des copolymères de styrène et d'esters d'acide acrylique, des copolymères d'acétate de vinyle et d'esters d'acide acrylique, des copolymères de styrène et de 1,3-butadiène,
b) un ou plusieurs composés hydrophobes du groupe comprenant des composés organosiliciques, des acides gras et leurs dérivés d'acides gras, ainsi que des cires d'hydrocarbure, et
c) un ou plusieurs colloïdes de protection,
**caractérisé en ce que** la proportion du composant b), rapportée au poids total du composant a), est de 100 à 500 % en poids, et des composés inorganiques ou minéraux sont contenus dans la poudre avec une proportion de 5 à 30 % en poids.

2. Additif hydrophobant selon la revendication 1, **caractérisé en ce que** comme composant b) un ou plusieurs composés organosiliciques sont contenus, parmi le groupe comprenant les esters d'acide silicique, les silanes, les polysilanes, les organosilanols, les di-, oligo- et polysiloxanes, les carbosilanes, les polycarbosilanes, les carbosiloxanes, les polycarbosiloxanes, les polysilylène disiloxanes et les cyclosiloxanes.

3. Additif hydrophobant selon la revendication 1 ou 2, **caractérisé en ce que** comme composant b) un ou plusieurs composés sont contenus, parmi le groupe comprenant les acides gras avec 8 à 22 atomes de carbone, leurs savons métalliques, leurs amides, ainsi que leurs esters avec des alcools univalents avec 1 à 14 atomes de carbone, avec du glycol, avec du polyglycol, avec du polyalkylène glycol, avec du glycérol, avec de la mono-, de la di- ou de la triéthanolamine, avec des monosaccharides et avec des composés polyhydroxylés.

4. Additif hydrophobant selon les revendications 1 à 3, **caractérisé en ce que** comme colloïde de protection c), des alcools polyvinyliques partiellement saponifiés ou complètement saponifiés, le cas échéant modifiés hydrophobiquement, avec un degré d'hydrolyse de 80 à 100 % en mole et une viscosité de Hôppler en solution aqueuse à 4 % de 1 à 30 mPa.s (méthode selon Höppler à 20 °C, DIN 53015) sont utilisés.

5. Procédé de préparation des additifs hydrophobants selon les revendications 1 à 4, **caractérisé en ce que** le composant b) est ajouté seul ou comme mélange avec d'autres additions à la dispersion aqueuse du polymère de base a) sous forme pure ou sous forme d'une pré-émulsion, ou est pulvérisé pendant le séchage avec la dispersion de polymère, ou est ajouté à la poudre de polymère après le séchage.

6. Utilisation des additifs hydrophobants selon les revendications 1 à 4 dans des produits chimiques pour le bâtiment, le cas échéant en association avec des agents de prise à prise hydraulique comme des ciments, du plâtre ou du verre soluble.

7. Utilisation des additifs hydrophobants selon les revendications 1 à 4 pour la préparation de colles pour le bâtiment, de colles de carrelage et de colles entièrement calorifuges, de crépis, de « Scimcoat », de mastics pour enduits, de mastics pour enduits sur sols, de produits nivelants, de suspensions d'étanchement, de mortiers pour joints et de peintures.

8. Utilisation des additifs hydrophobants selon les revendications 1 à 4 comme agents hydrophobants pour la modification ou la fixation de sable, d'argile, de papier, de textile et de fibres naturelles ou synthétiques.

9. Utilisation des additifs hydrophobants selon les revendications 1 à 4 dans des applications de revêtement et de peinture.
